# EUROPEAN PATENT SPECIFICATION

(11) **EP 2 992 713 B1**
(45) Date of publication and mention of the grant of the patent: **03.10.2018**
(21) Application number: 13720358.4
(22) Date of filing: 30.04.2013
(51) Int. Cl.: H04W 52/02, H04W 76/28, H04W 76/27

(54) **TERMINAL-INITIATED POWER MODE SWITCHING**
DURCH ENDGERÄT INITIIERTE STROMMODUSUMSCHALTUNG
COMMUTATION D'UN MODE DE PUISSANCE INITIÉE PAR UN TERMINAL

(43) Date of publication of application: 09.03.2016
(73) Proprietor: Sony Corporation, Tokyo 108-0075 (JP)
(72) Inventor: LJUNG, Rickard, S-25656 Helsingborg (SE); KARLSSON, Peter, S-22738 Lund (SE)
(74) Representative: Banzer, Hans-Jörg
(86) International application number: PCT/EP2013/058953
(87) International publication number: WO 2014/177184

(56) References cited:
- US-A1- 2010 235 667
- US-A1- 2012 020 393
- US-A1- 2012 207 070
- US-A1- 2012 281 566
- VODAFONE ET AL: "UE Â Fast DormancyÂ Behaviour", 3GPP DRAFT; R2-074848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137356, [retrieved on 2007-11-12]

## Description

### FIELD OF THE INVENTION

Embodiments of the invention relate to wireless communication. Embodiments of the invention relate in particular to a mobile terminal configured for communication with a wireless network, to a wireless network, to a communication system and methods performed by such devices in which power consumption of a modem of the mobile terminal is controlled.

### BACKGROUND OF THE INVENTION

With increasing popularity of mobile voice and data communication, there is an ever increasing demand for high-speed data communication. Modern mobile terminals of a communication network, e.g. smartphones, have advanced processing capabilities. The mobile terminals can run a wide variety of applications. These applications include social networks, e-mail services, update clients such as news update centers or weather forecasts, without being limited thereto.

Some of these applications continue to operate even when the mobile terminal is not in use. Some of these applications may continue to operate continuously or quasi-continuously even when a screen of the mobile terminal is switched off. In this case, the application(s) may continue to transmit or receive data via a modem of the mobile terminal. This causes the processor(s) of the mobile terminal which execute the application(s) to run repeatedly. Moreover, also the modem is switched on repeatedly to allow the application(s) to transmit or receive data. This reduces battery lifetime while providing only limited benefit to the user when the mobile terminal is not in use.

To mitigate the power consumption problems associated with data transfers initiated by applications which are executed by the mobile terminal, the transmission of messages by the application(s) over the modem may be restricted. This approach may not be sufficient to allow the amount of data transfers received by application(s) on the mobile terminal to be controlled in an efficient manner. When an application executed by the mobile terminal is associated with a large amount of push data traffic towards the mobile terminal, an undesirably large amount of battery power may still be drained from the battery while the mobile terminal is in a standby mode, for example.

To reduce modem power consumption, the mobile terminal may be set to different states. For illustration, 3GPP specification TS 25.331 V11.5.0 (2013-03) entitled "3rd Generation Partnership Project; Technical Specification Group Radio Access Network; Radio Resource Control (RRC); Protocol specification (Release 11)" defines different RRC states in section 7.1. While the mobile terminal may enter some of these states autonomously, e.g. when a timer expires, the various parameters which determine the RRC state of the mobile terminal or transitions between these states are controlled by a node of the communication network. These techniques may still not be adequate by themselves to address the power consumption problems associated with continued modem usage of applications running on the mobile terminal. For illustration, a social network or e-mail service or a news service running on the mobile terminal may receive incoming push data traffic. This may cause the mobile terminal to make a transition from an idle mode in which it is RRC disconnected to an RRC connected mode. The resulting modem activity reduces battery lifetime.

US 2012/0281566 A1 describes a method and apparatus for controlling connectivity to a network, where a wireless transmit receive unit may request to exit a dormant mode defined by a corresponding RRC state.

US 2010/0235667 A1 describes motion data sensor processing using various power modes.

'UE "Fast Domancy" Behaviour" by Vodafone et al., 3GPP draft; R2-074848, TSG-RAN WG2 Meeting #60, November 2007, describes that a message from a UE to the network indicates that the UE has completed its data transfer and that the UE desires a release from its current high battery consumption radio state to an Idle or URA_PCH state.

### BRIEF SUMMARY OF THE INVENTION

There is a continued need in the art for devices and methods which mitigate the problems associated with modem power consumption caused by application(s) executed by the mobile terminal.

The present disclosure provides a mobile terminal according to claim 1 and a method according to claim 14. The dependent claims define further embodiments.

According to embodiments, a mobile terminal initiated switching of a power mode to a power saving mode is introduced. The mobile terminal may signal to the communication network that it intends to enter a specific power saving mode. A set of several power modes which reduce power consumption may be defined in addition to a regular power mode, and the mobile terminal may signal to the communication network which one of the power saving modes the mobile terminal intends to enter. In the power modes which reduce power consumption, the mobile terminal may still be configured to make transitions between different Radio Resource Control, RRC, states, e.g. from the idle mode to the connected mode. Parameter settings associated with the respective power mode may define parameters of layer 1, layer 2, and/or layer 3 signalling between mobile terminal and the communication network.

A mobile terminal according to an embodiment comprises a modem for communication with a wireless network. The mobile terminal comprises a logic configured to select a power mode from a plurality of power modes. The logic is configured to control the modem to transmit a power mode change request which includes an indicator for the selected power mode. The logic is configured to control the mobile terminal to enter the selected power mode in response to receiving a power mode change response.

The logic may be configured to select the power mode in dependence on applications executed by the mobile terminal to reduce data transfers to the mobile terminal while the applications are executed by the mobile terminal.

The logic may be configured to select the power mode to reduce the data transfers to the mobile terminal while the mobile terminal is not in use. The logic may be configured to select the power mode to reduce the data transfers to the mobile terminal while the mobile terminal is in a standby mode.

The mobile terminal may be configured to switch between different RRC states while operating in the selected power mode.

The indicator for the selected power mode may be selected from a finite set of indicators. The set may include one unique indicator for each power mode. The set of indicators may include more than two indicators. The set of indicators may include at least four indicators.

The selected power mode and at least one other power mode of the plurality of power modes may have different parameters for the first and/or second layer signalling of the radio interface between the mobile terminal and the communication network.

The selected power mode and at least one other power mode of the plurality of power modes may have different parameters for the third layer signalling of the radio interface between the mobile terminal and the communication network. The selected power mode and at least one other power mode of the plurality of power modes may have different DRX parameter settings, for example.

The different DRX parameter settings may comprise different DRX cycle lengths. Additionally or alternatively, the different DRX parameter settings may comprise different inactivity timer values. Additionally or alternatively, the different DRX parameter settings may comprise different paging cycles.

The mobile terminal may be configured to switch between an idle state and an RRC connected state while operating in the selected power mode.

At least two power modes of the plurality of power modes may be distinguished from each other in the number of DRX states. The logic may select one of these at least two power modes. For illustration, a first power mode may have only one DRX state while the mobile terminal is in the idle state. A second power mode may have two different DRX states while the mobile terminal is in the idle state. The two different DRX states may be an idle DRX state with long DRX cycle and an idle DRX state with short DRX cycle.

At least two power modes of the plurality of power modes may have different protocol procedures for the mobile terminal accessing the wireless network. The logic may select one of these at least two power mode.

At least two power modes of the plurality of power modes may have different radio parameters. At least two power modes of the plurality of power modes may have different terminal output power classes. In one of the at least two power modes, transmission and/or reception may be limited to half duplex operation. The logic may select one of these at least two power mode.

At least two power modes of the plurality of power modes may define different mobility management procedure. For illustration, a first power mode may have more limited cell change possibilities than a second power mode. The logic may select the first power mode or the second power mode.

The mobile terminal may be configured to activate the modem for processing incoming data transfers with a timing which depends on the selected power mode while operating in the selected power mode.

The mobile terminal may be configured to transmit the power mode change request in an RRC Connection Establishment procedure or in an RRC Connection Reconfiguration procedure.

The mobile terminal may comprise a display. The logic may be configured to select the power mode in dependence on whether the display is switched off. The logic may be configured to select the power mode in dependence on whether the display is switched off for at least a predetermined time period.

The mobile terminal may comprise at least one sensor. The logic may be configured to select the power mode in dependence on whether the display is switched off and in dependence on an output signal of the at least one sensor. The at least one sensor may comprise a motion sensor. The output signal of the motion sensor may be used by the logic to determine whether the mobile terminal is in use and/or whether the mobile terminal is being carried by a user. The logic may select the power mode based on whether the mobile terminal is in use and/or whether the mobile terminal is being carried by the user.

The logic may be configured to prevent an application from causing a data transmission via the modem when the display is switched off. The logic may activate a firewall of the mobile terminal between the application and the modem in dependence on whether the display is switched off for at least a predetermined time period, to restrict usage of the modem by the application for outgoing data transfers.

The power mode change request may comprise a plurality of indicator bits which include the indicator for the selected power mode. The power mode change request may comprise two indicator bits. The power mode change request may comprise three indicator bits. Accordingly, up to four or up to eight different power modes may be defined.

The logic may be configured to identify a further power mode in dependence on a further power mode identifier included in a further power mode change request received by the mobile terminal. The further power mode change request is a network-initiated power mode change request. The logic may be configured to control the modem to transmit a further power mode change response in response to receiving the further power mode change request. The logic may be configured to control the mobile terminal to enter the further power mode in response to receiving the further power mode change request. This allows the mobile terminal to enter a power mode selected by the communication network.

The mobile terminal may be user equipment. The user equipment may be configured for communication with a Long Term Evolution (LTE) network. The mobile terminal may be a mobile phone, e.g. a smartphone.

The mobile terminal may be a machine-to-machine (M2M) terminal. The mobile terminal may be configured to perform M2M communication via the wireless network.

According to another embodiment, a radio access network (RAN) node is provided. The RAN node has a wireless interface. The RAN node has a processing device coupled to the wireless interface. The wireless interface is configured to receive a power mode change request from the mobile terminal. The processing device is configured to determine which power state of a plurality of power states a mobile terminal intends to enter based on an indicator for the power state included in the power mode change request. The processing device is configured to control the wireless interface to transmit a power mode change response.

The RAN node may be configured to control data transfers to the mobile terminal in accordance with the indicator for the power state included in the power mode change request after transmitting the power mode change response.

The RAN node may be configured to reduce a number and/or rate of data transfers to applications on the mobile terminal in accordance with the indicator for the power state included in the power mode change request after transmitting the power mode change response.

The RAN node may be configured to adjust a paging cycle for the mobile terminal after transmitting the power mode change response.

The RAN node may be a base station. The RAN node may in particular be a NodeB or an evolved NodeB (eNodeB).

A communication system according to an embodiment comprises the mobile terminal of an embodiment and a radio access network. The radio access network may be configured to receive the power mode change request from the mobile terminal. The radio access network may be configured to identify the selected power mode based on the indicator included in the power mode change request. The radio access network may be configured to transmit a power mode change response to the mobile terminal. The radio access network may be configured to control data transfers to the mobile terminal based on the selected power mode.

The radio access network may comprise a RAN node, e.g. a NodeB or eNodeB, configured to perform the functions indicated above. The RAN node may be a RAN node according to an embodiment.

A method of controlling a transition between power modes of a mobile terminal according to an embodiment comprises selecting, by the mobile terminal, a power mode from a plurality of power modes. The mobile terminal transmits a power mode change request over a wireless interface, the power mode change request includes an indicator for the selected power mode. In response to receiving a power mode change response, the mobile terminal enters the selected power mode by the mobile terminal.

The power mode may be selected in dependence on applications executed by the mobile terminal to reduce data transfers to the mobile terminal while the applications are executed by the mobile terminal.

The data transfers to applications executed by the mobile terminal may be reduced while the mobile terminal is not in use. The data transfers to applications executed by the mobile terminal may be reduced while the mobile terminal is in a standby mode.

The mobile terminal may switch between different Radio Resource Control, RRC, states while operating in the selected power mode.

The indicator for the selected power mode may be selected from a finite set of indicators, which includes respectively one indicator for each power mode.

The selected power mode and at least one other power mode of the plurality of power modes may have different parameter settings for layer 1, layer 2, and/or layer 3 signalling between the mobile terminal and the communication network.

The different DRX parameter settings may comprise different DRX cycle lengths. Additionally or alternatively, the different DRX parameter settings may comprise different inactivity timer values. Additionally or alternatively, the different DRX parameter settings may comprise different paging cycles.

The method may comprise switching between an idle mode and an RRC connected mode while the terminal operates in the selected power mode.

The method may comprise activating the modem for processing received data transfers with a timing which depends on the selected power mode while the mobile terminal operates in the selected power mode.

The power mode change request may be transmitted in an RRC Connection Establishment procedure or in an RRC Connection Reconfiguration procedure.

The power mode may be selected in dependence on whether the display is switched off. The power mode may be selected in dependence on whether the display is switched off for at least a predetermined time period.

The power mode may be selected in dependence on whether the display is switched off and in dependence on an output signal of the at least one sensor. The at least one sensor may comprise a motion sensor. The output signal of the motion sensor may be analyzed to determine whether the mobile terminal is in use and/or whether the mobile terminal is carried by a user. The power mode may be selected based on whether the mobile terminal is in use and/or whether the mobile terminal is carried by the user.

The method may further comprise preventing an application from causing a data transmission via the modem when the display is switched off. A firewall between the application and the modem may be activated in dependence on whether the display is switched off for at least a predetermined time period, to restrict usage of the modem by the application for outgoing data transfers.

The power mode change request may comprise a plurality of indicator bits which include the indicator for the selected power mode. The power mode change request may comprise two indicator bits. The power mode change request may comprise three indicator bits. Accordingly, up to four or up to eight different power modes may be defined.

The method may comprise identifying a further power mode in dependence on a further power mode identifier included in a further power mode change request received by the mobile terminal. The method may comprise controlling the modem to transmit a further power mode change response in response to receiving the further power mode change request. The method may comprise controlling the mobile terminal to enter the further power mode in response to receiving the further power mode change request. This allows the mobile terminal to enter a power mode selected by the communication network.

The method may be performed by the mobile terminal of an embodiment.

Devices and methods according to embodiments allow a mobile terminal to initiate a transition to a certain power mode having lower power consumption than the regular, fully operative power mode. Incoming data transfers for applications executed on the mobile terminal may thereby be reduced by selecting a power mode with lower modem power consumption. The amount of time for which the modem must be switched on to process incoming data transfers may be reduced. Battery lifetime may be improved.

### BRIEF DESCRIPTION OF THE DRAWINGS

Embodiments of the invention will be described with reference to the accompanying drawings in which the same or similar reference numerals designate the same or similar elements.
Fig. 1 is a schematic view of a communication system according to an embodiment.
Fig. 2 is a flow chart of a method according to an embodiment.
Fig. 3, Fig. 4 and Fig. 5 are diagrams illustrating operation of a mobile terminal and a radio access network node in a method according to an embodiment.
Fig. 6 is a diagram illustrating states of a mobile terminal between which the mobile terminal may switch while operating in a selected power mode.
Fig. 7 is a block diagram representation of functional units of a mobile terminal according to an embodiment.
Fig. 8 is a block diagram representation of a radio access network node according to an embodiment.
Fig. 9 is a flow chart of a method according to an embodiment.

### DESCRIPTION OF EMBODIMENTS

Exemplary embodiments of the invention will be described with reference to the drawings. While some embodiments will be described in the context of specific fields of application, e.g. in the context of exemplary radio access technologies, the embodiments are not limited to this field of application. The features of the various embodiments may be combined with each other unless specifically stated otherwise.

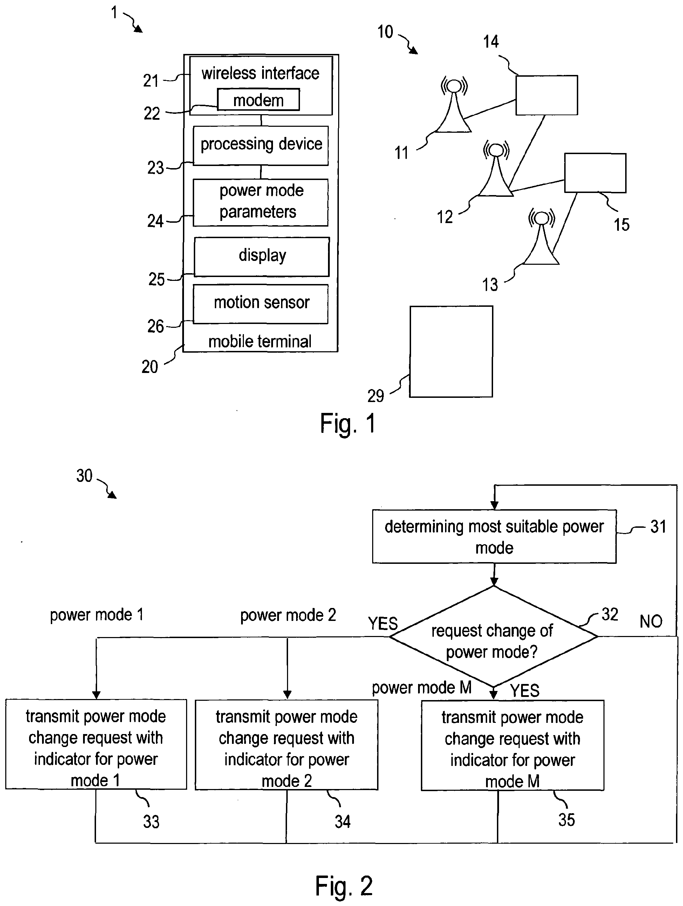

Fig. 1 is a schematic view of a communication system 1 according to an embodiment. The communication system 1 comprises a mobile terminal 20. The communication system 1 comprises a communication network 10. The communication network 10 has a radio access network (RAN). The radio access network includes a plurality of base stations 11-13. The base stations 11-13 may be operatively coupled to other nodes 14, 15 which may be provided in the radio access network or in a core network (CN) of the communication network 10. The specific configuration of the communication network 10, of the base stations 11-13 and of the nodes 14, 15 depends on the communication standard. For illustration, the communication network 10 may be a Global System for Mobile Communications (GSM) network. In this case, the RAN is a GSM EDGE Radio Access Network (GERAN), with the nodes 14, 15 being base station controllers. The communication network 10 may be a Universal Mobile Telecommunications System (UMTS) network. In this case, the RAN is a UMTS Terrestrial Radio Access Network (UTRAN), with the base stations 11-13 respectively being a NodeB and the nodes 14, 15 being a Radio Network Controller (RNC). The communication network 10 may be a Long Term Evolution (LTE) network. In this case, the RAN is an evolved UTRAN (eUTRAN), with the base stations 11-13 respectively being an evolved Node B (eNodeB), and the nodes 14, 15 being a Mobility Management Entity (MME) and/or Serving Gateway (S-GW) in the core network.

The mobile terminal 20 has a wireless interface 21 or several wireless interfaces 21 to communication with at least one radio access network (RAN). The wireless interface(s) 21 comprises a modem 22. The modem 22 performs the modulation and demodulation, respectively, required for the respective communication standard used by the mobile terminal 20. The mobile terminal 20 may be configured for communication with the RAN according to the Radio Resource Control, RRC, protocol. For illustration, the mobile terminal 20 may be configured to communicate with the RAN in accordance with 3GPP specification TS 25.331. The mobile terminal 20 may be configured for radio communication with the RAN in accordance with 3GPP specification TS 25.331 V11.5.0 (2013-03) entitled "3rd Generation Partnership Project; Technical Specification Group Radio Access Network; Radio Resource Control (RRC); Protocol specification (Release 11)". Alternatively or additionally, the mobile terminal 20 may be configured to communicate with the RAN in accordance with 3GPP specification TS 36.331. The mobile terminal 20 may be configured for radio communication with the RAN in accordance with 3GPP specification TS 36.331 V11.3.0 (2013-03) entitled "3rd Generation Partnership Project; Technical Specification Group Radio Access Network; Evolved Universal Terrestrial Radio Access (E-UTRA); Radio Resource Control (RRC); Protocol specification (Release 11)".

The mobile terminal 20 has different power modes. In at least some of the power modes, the usage of the modem 22 for processing data transfers or other messages received by the mobile terminal 20 is limited to reduce the power consumption. These power modes which provide lower power consumption of the modem are also referred to as power saving modes herein, or simply as power modes having lower power consumption than a regular, fully operative power mode.

In several or in all of the power modes, the mobile terminal 20 may be configured to make transitions between an idle state in which the mobile terminal 20 is in an RRC disconnected state and an RRC connected state. This distinguishes the power modes which provide reduced power consumption from conventional discontinuous reception, DRX, states or from the URA_PCH state, the CELL_PCH state, the CELL_FACH state, and the CELL_DCH state as defined in 3GPP specification TS 25.331. The mobile terminal 20 may have the states defined in 3GPP specification TS 25.331 V11.5.0 (2013-03) entitled "3rd Generation Partnership Project; Technical Specification Group Radio Access Network; Radio Resource Control (RRC); Protocol specification (Release 11)", sections 7.1 and 7.2, and may switch between the states while operating in a selected power mode. The mobile terminal 20 may be in one of these states to receive signals while operating in one of the various power modes which provide lower power consumption, but still remains operative to switch between the idle state and the RRC connected state while being in the respective power mode. By contrast, the mobile terminal 20 is always in the RRC connected state when operating in the URA_PCH state, the CELL_PCH state, the CELL_FACH state, and the CELL_DCH state.

The mobile terminal 20 has a processing device 23 which controls operation of the mobile terminal 20. The processing device 23 may comprise one microprocessor or several microprocessors, one microcontroller or several microcontrollers, an application specific integrated circuit (ASIC) or a combination of such components. The processing device 23 may perform operations of a logic which determines which one of the several power modes should be used, as will be described in more detail with reference to Fig. 2 to Fig. 9.

The mobile terminal 20 is configured such that it can request that a specific power mode of the plurality of available power modes shall be used. For illustration, up to four or up to eight different power modes may be pre-defined. An indicator may be assigned to each one of the power modes. As used herein, the term "indicator" for a power mode refers to a unique identifier which may be assigned to the respective power mode such that one of a plurality of power modes may be uniquely identified based on the indicator.

The mobile terminal 20 is configured to transmit a power mode change request to the communication network 10. The power mode change request may include several purpose bits which contain the unique identifier for a power mode selected by the mobile terminal 20. The processing device 23 may control the wireless interface 21 to transmit the power mode change request with the indicator for the selected power mode.

The communication network 10 may transmit a power mode change response to the mobile terminal 20. The power mode change response may be an acknowledgement message confirming that the mobile terminal 20 may enter the power mode previously selected by the mobile terminal 20 as being a suitable power mode. This suitable power mode is defined by the indicator in the power mode change request transmitted by the mobile terminal 20.

The decision on which power mode is a suitable power mode may be performed in a wide variety of ways. In one implementation, the processing device 23 selects the power mode depending on whether the mobile terminal 20 is in a standby mode. The power mode may be selected depending on whether the mobile terminal 20 has been in a standby mode for a certain time period. The power mode may be selected depending on whether a display 25 of the mobile terminal 20 has been switched off for a predefined time period. The power mode may be selected depending on an output signal of a sensor of the mobile terminal 20. For illustration, the mobile terminal 20 may have a motion sensor 26. Based on an output signal of the motion sensor 26 and/or information on whether the display 25 is switched on or off, the processing device 23 may determine which power mode would be suitable.

The processing device 23 may also execute applications. At least one application or several of the applications may continue to be executed even when the mobile terminal 20 has entered a standby mode, for example. Examples for such applications include social networks, e-mail services, update clients such as news update centers or weather forecasts, without being limited thereto. The application(s) would normally transmit data over the wireless interface 21 to the communication network 10 and would receive data from the communication network 10. The power modes with lower power consumption than the regular power mode ensure that the data transfers to the mobile terminal 20 are reduced by signalling to the communication network that a specific power mode should be used.

The decision on which power mode is a suitable power mode may also take into account which applications are executed on the mobile terminal 20. For illustration, when an e-mail application is being executed by the mobile terminal 20, the processing device 23 may select a power mode which allows data to be transferred to the mobile terminal 20 more frequently than if only a news update service or weather forecast application are executed. The processing device 23 may predict which data traffic will be required in dependence on the applications which are executed on the mobile terminal 20.

The different power modes may each have a set of parameters 24 which defines operation in the respective power mode. The power mode parameters 24 may be stored in the mobile terminal 20. The power mode parameters may define how parameters or functionalities in a physical layer are defined. The power mode parameters may define parameters for the physical layer of the air interface between the mobile terminal 20 and the communication network 10. Alternatively or additionally, the power mode parameters may be parameters for layer 2 and/or layer 3 signalling between the mobile terminal 20 and the communication network 10.

The specific definition of the various power modes and the respective parameters may depend on the configuration of the mobile terminal 20. For illustration, for a mobile terminal which is a mobile phone, the different power modes may correspond to definitions of different DRX cycle lengths and/or different paging cycles when the mobile terminal is in an RRC disconnected state while operating in the respective mode. For further illustration, the different power modes may correspond to different output power classes of the mobile terminal 20.

Additionally or alternatively, the selected power mode may add one or more additional DRX cycles. A power mode could for example add a long DRX level, in addition to a standard idle state DRX, to the idle RRC state.

Additionally or alternatively, the selected power mode may define a different protocol procedure for the mobile terminal accessing the wireless network.

Additionally or alternatively, the selected power mode may define different radio parameters, e.g. one or several different terminal output power classes and/or may limit the transmission/reception to half duplex operation.

Additionally or alternatively, the selected power mode may define different mobility management procedures. The selected power mode may limit or remove cell change possibilities to reduce required measurements to be performed in the mobile terminal.

When the mobile terminal 20 switches to the selected power mode in response to receiving a power mode switch response from the communication network 10, the modem 22 may be controlled in dependence on the power mode parameters for the respective power mode. The processing device 23 may retrieve the power mode parameters from the memory 24.

The mobile terminal 20 may have various configurations. For illustration, the mobile terminal 20 may be a machine-to-machine (M2M) communication terminal. The mobile terminal 20 may communicate with another M2M terminal 29 through the communication network 10. The number of defined power modes and/or the specific power mode parameters may depend on the specific configuration of the mobile terminal 20. This allows one to optimize physical layer behaviour towards different M2M use cases, smartphones in different modes, non-voice centric devices, or similar.

Fig. 2 is a flow chart of a method 30 according to an embodiment. The method 30 may be performed by the mobile terminal 20.

At 31, a logic determines a most suitable power mode for the mobile terminal. A selection algorithm may be employed to determine which power mode of a plurality of power modes is the most suitable power mode. In one implementation, a power mode with lower power consumption than a regular, fully operative power mode may be determined if the display 25 is off. Additional or alternative inputs may be used in the determination, e.g. an output signal of a motion sensor, information on running applications, etc.

The most suitable power mode may be identified such that it meets an expected future signalling need for the mobile terminal 20. The future signalling need may be predicted based on the applications which are executed. Historical data on the signalling associated with each application may be collected by the mobile terminal 20 and may be used to predict the future signalling need, for example. Alternatively or additionally, information may be retrieved from the applications which define the signalling need of each application. In determining the most suitable power mode, previous power mode changes may also be taken into account. For illustration, if the current power mode has been active for only a short time period so far, penalties may be imposed on the other power modes in the selection algorithm to introduce hysteric behaviour which prevents ping-pong behaviour.

At 32, the logic determines whether a change of power mode should be requested. A change of power mode may be requested if the most suitable power mode determined at 31 is different from a current power mode. A change of power mode may be requested if the same power mode is consistently identified as the most suitable power mode for a predefined period. If it is determined that no change of power mode is to be requested, the method returns to step 31.

If a change of power mode is to be requested, a power mode change request is transmitted by the mobile terminal. The power mode change request depends on the power mode which is identified as the most suitable power mode at step 31.

If power mode "1" is selected because it is the most suitable power mode, at 33 a power mode change request is transmitted which includes an indicator for the power mode "1". If power mode "2" is selected because it is the most suitable power mode, at 34 a power mode change request is transmitted which includes an indicator for the power mode "2". If power mode "M" is selected because it is the most suitable power mode, at 35 a power mode change request is transmitted which includes an indicator for the power mode "M".

The respective power mode is entered in response to receiving a power mode change response which positively acknowledges the power mode change request. The method may then return to step 31.

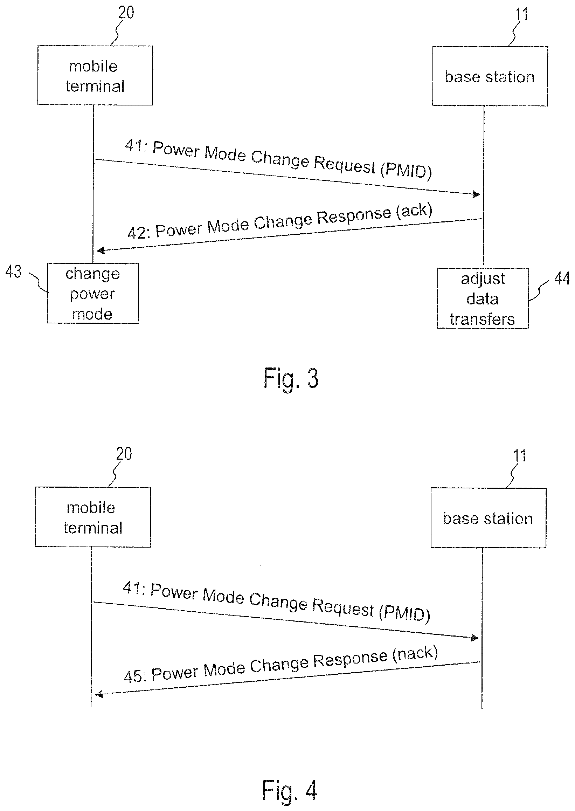

Fig. 3 shows a signalling between the mobile terminal 20 and the base station 11 of the communication network.

The mobile terminal 20 transmits a message 41 which is a power mode change request. The power mode change request includes an indicator PMID for the selected power mode. The indicator PMID may be contained in two indicator bits or in three indicator bits of the message 41, for example. Up to four or up to eight different power modes may be defined thereby.

The base station 11 determines whether the mobile terminal 20 may switch its power mode to the selected power mode indicated by the indicator PMID in the message 41. The determining may include determining whether the data transmission speeds and/or network load meet target conditions even when the mobile terminal 20 switches to the selected power mode indicated by the indicator PMID.

If the base station 11 or another RAN node determines that the mobile terminal 20 may switch its power mode to the selected power mode, it transmits a positive acknowledgement (ack) message 42 to the mobile terminal 20. The message 42 is a power mode change response which accepts the power mode switching requested by the mobile terminal.

At 43, in response to receiving the power mode change response which accepts the power mode switching, the mobile terminal 20 changes the power mode to the power mode indicated in the message 41. The change may occur at a pre-defined time or may be triggered by a triggering event. The change may occur selectively in dependence on whether the positive acknowledgment message 42 was received.

At 44, the base station 11 and/or another node in the RAN may adjust data transfers to the mobile terminal 20 in accordance with the indicator for the power mode included in the power mode change request message 41. This may limit signalling towards the mobile terminal 20 if a power mode with low power consumption is selected. The adjustment may be made at layer 1 of the signalling between the base station 11 and the mobile terminals 20. The adjustment may be made at layer 2 and/or layer 3 of the signalling between the base station 11 and the mobile terminals 20.

Fig. 4 illustrates the signalling when the base station 11 or another RAN node determines that the mobile terminal 20 may not switch its power mode to the selected power mode. The base station 11 or another RAN node transmits a negative acknowledgement (nack) message 45 to the mobile terminal 20. The message 45 is a power mode change response which rejects the power mode switching requested by the mobile terminal.

In response to receiving the power mode change response which rejects the power mode switching, the mobile terminal 20 does not change its power mode. The mobile terminal 20 may, however, subsequently transmit a new power mode change request. The base station 11 does not adjust the signalling with the mobile terminal at layer 1, layer 2 and/or layer 3 because no power mode switching is performed.

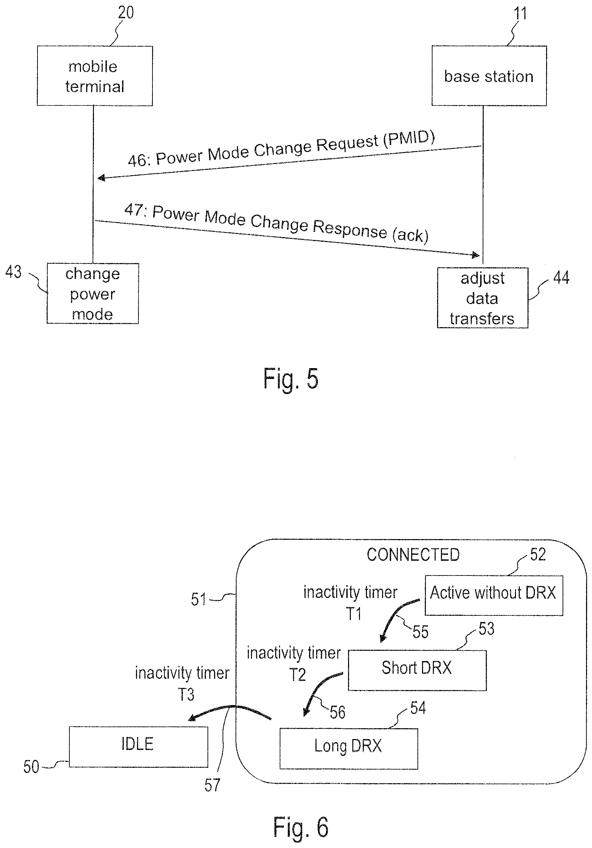

In addition to the mobile terminal initiated power mode switching explained above, the mobile terminal and RAN may also be configured for a RAN-initiated power mode switching. In this case, the RAN may transmit a power mode change request which includes an identifier for one power mode of the plurality of power modes. This is illustrated in Fig. 5.

The base station 11 or another RAN node transmits a message 46 which is a further power mode change request. The further power mode change request includes an indicator for a further power mode selected by the base station 11 or another RAN node.

The mobile terminal 20 determines whether the power mode switching to the further power mode can be made. The mobile terminal 20 may determine whether required data transmission speeds and/or transmission delays could be attained when the mobile terminal 20 switches to the further power mode indicated by the message 46.

If the mobile terminal 20 accepts the requested power mode switching, it transmits an acknowledgment message 47. The mobile terminal 20 subsequently switches to the further power mode at 43.

If the mobile terminal 20 rejects the requested power mode switching, it transmits a negative acknowledgment message (not shown in Fig. 5).

The plural power modes must not be confused with the RRC disconnected state and the RRC connected states. The mobile terminal 20 may still switch between the RRC disconnected state and the RRC connected state while it remains in one and the same power mode. The power modes may be distinguished in the parameters of the physical layer of the radio interface which are respectively used, for example.

The signalling explained with reference to Fig. 3, Fig. 4, and Fig. 5 may be performed during an RRC Connection Establishment procedure or during an RRC Connection Reconfiguration procedure.

The signalling explained with reference to Fig. 3, Fig. 4, and Fig. 5 may be performed during an RRC Connection Establishment procedure or during an RRC Connection Reconfiguration procedure as defined in 3GPP specification TS 25.331 or as defined in 3GPP specification TS 36.331. The signalling explained with reference to Fig. 3, Fig. 4, and Fig. 5 may be performed during an RRC Connection Establishment procedure as defined in 3GPP specification TS 25.331 V11.5.0 (2013-03) entitled "3rd Generation Partnership Project; Technical Specification Group Radio Access Network; Radio Resource Control (RRC); Protocol specification (Release 11)", section 8.1.3. Alternatively or additionally, the signalling explained with reference to Fig. 3, Fig. 4, and Fig. 5 may be performed during an RRC Connection Establishment procedure or during an RRC Connection Reconfiguration procedure as defined in 3GPP TS 36.331 V11.3.0 (2013-03) entitled "3rd Generation Partnership Project; Technical Specification Group Radio Access Network; Evolved Universal Terrestrial Radio Access (E-UTRA); Radio Resource Control (RRC); Protocol specification (Release 11)", section 5.3.3 or section 5.3.5.

Fig. 6 schematically illustrates various RRC states which the mobile terminal may have. In an idle state 50, the mobile terminal 20 is RRC disconnected. In an RRC connected state 51, the mobile terminal 20 is RRC connected. The RRC connected state may have various sub-states. The sub-states may include an active state without DRX 52, a short DRX cycle state 53, and a long DRX cycle state 54. Transitions 55-57 between the different RRC states may be triggered when an inactivity timer expires.

In a power mode selected by the mobile terminal 20, the mobile terminal 20 may still be operative to make transitions between the RRC disconnected state 50 and the RRC connected state 51, including sub-states of the RRC connected state 51.

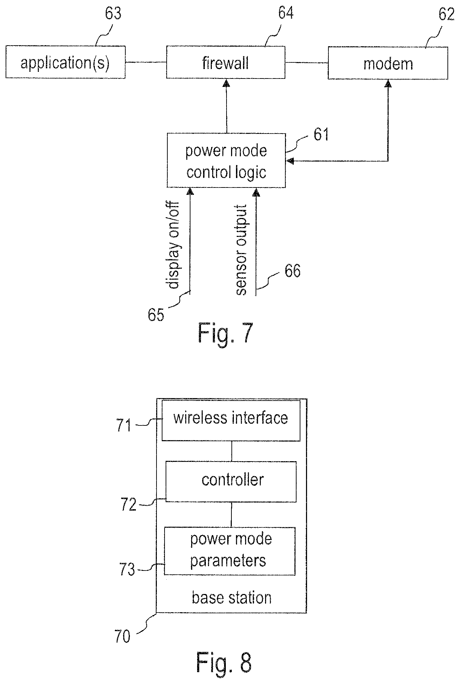

Fig. 7 is a functional block representation of a mobile terminal according to an embodiment.

A power mode selection logic 61 may determine which power mode of a plurality of power modes should be used. The power mode selection logic 61 may select a power mode in dependence on a signal 65 indicating whether the display is switched on or off. Alternatively or additionally, the power mode selection logic 62 may select a power mode in dependence on a signal 66 which is indicative of a motion of the mobile terminal. The signal 66 may be an output signal of a motion sensor. Alternative or additional signals may be evaluated to determine which power mode would be most suitable.

The power mode selection logic 61 may control a modem 62 to transmit a power mode change request with an indicator for a selected power mode. The power mode selection logic 61 may determine whether a power mode change response received from the communication network is an ack-message or a nack-message. Depending on the response, the power mode selection logic 61 may control the modem 62 to switch the mobile terminal to the selected power mode. Power mode switching may comprise adapting the layer 1, layer 2, and/or layer 3 signalling between the mobile terminal and the communication network.

The power mode selection logic 61 may also selectively control a firewall 64. The firewall 64 is operative to restrict or prevent an application or several applications 63 running on the mobile terminal from transmitting data to the communication network. The firewall 64 limits modem usage by the application(s) for outgoing data transfers.

Fig. 8 shows a schematic block diagram representation of a RAN node 70 according to an embodiment. The RAN node 70 may be an eNodeB, for example. The RAN node 70 has a wireless interface 71 to receive a power mode change request from the mobile terminal 20. The RAN node 70 has a controller 72 configured to retrieve an indicator for a power mode from the received power mode change request. The controller 72 may be configured to determine whether power mode switching of the mobile terminal 20 to the selected power mode may be accepted. If the power mode switching can be accepted, the controller 72 controls the wireless interface 71 to output a power mode change response to acknowledge the requested power mode switching.

The controller 72 is configured to control data transmission to and from the mobile terminal 20 in dependence on the selected power mode identified by the indicator in the received power mode change request. Power mode parameters 73 may be stored in the RAN node 70 for each one of the plurality of power modes which the mobile terminal may select. The power mode parameters 73 for different power modes may include different parameters for layer 1 signalling between the mobile terminal and the RAN. The power mode parameters 73 for different power modes may include different parameters for layer 2 signalling between the mobile terminal and the RAN. The power mode parameters 73 for different power modes may include different parameters for layer 3 signalling between the mobile terminal and the RAN.

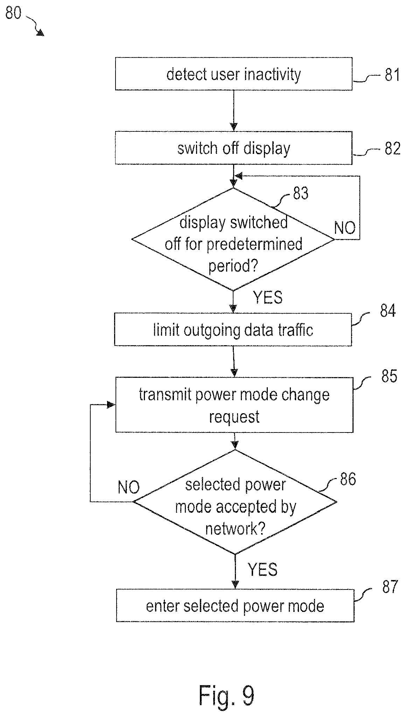

Fig. 9 is a flow chart of a method 80 according to an embodiment. The method 80 may be performed by the mobile terminal 20. The method 80 illustrates one exemplary use case for mobile terminal initiated power mode switching. In the method 80, a power mode with low power consumption is selected when the mobile terminal 20 is not in use, while some applications continue to be executed on the mobile terminal 20.

At 81, user inactivity is detected. User inactivity may be detected by determining whether the input actions were performed on an input interface or whether there is ongoing voice or data communication.

At 82, the display is switched off after a delay time.

At 83, it is determined whether the display has been switched off for a predetermined period. If the display has not been switched off for a predetermined period, the monitoring may be continued. When user activity is detected, the display is switched on again. When it is detected that the display has been switched off for a predetermined period, the method proceeds to 84.

At 84, outgoing data traffic transmitted from applications to the communication network is limited. A firewall between the application(s) and a modem may be activated to reduce modem usage of the application(s) for outgoing data traffic.

At 85, a power mode change request is transmitted. The power mode change request comprises an indicator for a selected power mode. The mobile terminal may select the power mode based on the signalling needs anticipated for a state in which the display is switched off and the mobile terminal is not being used by the user.

At 86, it is determined whether a power mode change response is received from the communication network to indicate that the change to the selected power mode is approved. If the communication network rejects the power mode switching, the method may terminate or may return to step 85 after a delay.

At 87, in response to receiving a power mode change response which accepts the requested power mode switching, the mobile terminal enters the selected power mode.

Various effects are attained by the devices and methods according to embodiments. For illustration, the mobile terminal initiated signalling to request that a specific power mode may be used may efficiently control the incoming data traffic received by the mobile terminal from the network. The mobile terminal can still switch between RRC connected and RRC disconnected states in the selected power mode, while the parameters settings for layer 1, layer 2, and/or layer 3 signalling between the mobile terminal and the RAN may depend on the power mode.

While exemplary embodiments have been described with reference to the drawings, modifications may be implemented in other embodiments. For illustration, the UE may be a mobile phone, a M2M terminal, or another mobile terminal. Further, while exemplary network technologies have been described, embodiments of the invention may be used in combination with other network technologies.

The operation of the various functional units may be implemented by hardware, by software, or a combination thereof. For illustration, the functions of the logic which selects a power mode may be performed by a microprocessor or microcontroller which executes instructions programmed in a non-volatile memory.

## Claims

1. A mobile terminal (20, 29), comprising:
a modem (22; 62) for communication with a wireless network (10), and
a logic (23; 61) configured to
- select a power mode from a plurality of power modes, the power modes each being different from a Radio Resource Control, RRC, state and being associated with a parameter setting defining operation in the respective power mode,
- if the selected power mode is different from a current power mode of the mobile terminal (20, 29), control the modem (22; 62) to transmit to the wireless network (10) a power mode change request (41) which includes an indicator for the selected power mode, and
- in response to receiving from the wireless network (10) a power mode change response (42) confirming that the mobile terminal (20, 29) may enter the previously selected power mode, control the mobile terminal (20, 29) to switch to the selected power mode.

2. The mobile terminal (20, 29) of claim 1,
wherein the logic (23; 61) is configured to select the power mode in dependence on applications (63) executed by the mobile terminal (20, 29) to reduce data transfers to the mobile terminal (20, 29) while the applications (63) are executed by the mobile terminal (20, 29).

3. The mobile terminal (20, 29) of claim 1 or claim 2,
wherein the mobile terminal (20, 29) is configured to switch between different Radio Resource Control, RRC, states (50-54) while operating in the selected power mode.

4. The mobile terminal (20, 29) of claim 3,
wherein the selected power mode and at least one other power mode of the plurality of power modes have different parameter settings for physical layer signalling between the mobile terminal (20, 29) and the communication network (10).

5. The mobile terminal (20, 29) of claim 3 or claim 4,
wherein the selected power mode and at least one other power mode of the plurality of power modes have different discontinuous reception, DRX, parameter settings, wherein the different DRX parameter settings comprise at least one of:
- different DRX cycle lengths,
- different inactivity timer values, and/or
- different paging cycles.

6. The mobile terminal (20, 29) of any one of claims 3 to 5,
wherein the mobile terminal (20, 29) is configured to switch between an idle state and an RRC connected state while operating in the selected power mode.

7. The mobile terminal (20, 29) of any one of claims 3 to 6,
wherein the mobile terminal (20, 29) is configured to transmit the power mode change request (41) in an RRC Connection Establishment procedure or in an RRC Connection Reconfiguration procedure.

8. The mobile terminal (20, 29) of any one of the preceding claims,
further comprising:
a display (25),
wherein the logic (23; 61) is configured to select the power mode in dependence on whether the display (25) is switched off.

9. The mobile terminal (20, 29) of claim 8, further comprising:
at least one sensor (26),
wherein the logic (23; 61) is configured select the power mode in dependence on whether the display (25) is switched off and in dependence on an output signal (66) of the at least one sensor (26).

10. The mobile terminal (20, 29) of claim 8 or claim 9,
wherein the logic (23; 61) is configured to prevent an application (63) from causing a data transmission via the modem (22; 62) when the display (25) is switched off.

11. The mobile terminal (20, 29) of any one of the preceding claims,
wherein the power mode change request (41) comprises a plurality of indicator bits which include the indicator for the selected power mode.

12. The mobile terminal (20, 29) of any one of the preceding claims,
wherein the logic (23; 61) is configured to
- identify a further power mode in dependence on a further power mode identifier included in a further power mode change request (46) received by the mobile terminal (20, 29),
- in response to receiving the further power mode change request (46), control the modem (22; 62) to transmit a further power mode change response (42), and
- in response to receiving the further power mode change request (46), control the mobile terminal (20, 29) to switch to the further power mode.

13. A communication system, comprising:
the mobile terminal (20, 29) of any one of the preceding claims; and
a radio access network (10) configured to
- receive the power mode change request (41) from the mobile terminal (20, 29),
- identify the selected power mode based on the indicator included in the power mode change request (41),
- transmit the power mode change response (42) to the mobile terminal (20, 29), and
- control data transfers to the mobile terminal (20, 29) based on the selected power mode.

14. A method of performing a transition between power modes of a mobile terminal (20, 29), the method comprising:
- selecting, by the mobile terminal (20, 29), a power mode from a plurality of power modes, the power modes each being different from a Radio Resource Control, RRC, state and being associated with a parameter setting defining operation in the respective power mode,
- if the selected power mode is different from a current power mode of the mobile terminal (20, 29), transmitting, by the mobile terminal (20, 29), a power mode change request (41) over a wireless interface (21) to a wireless network (10), the power mode change request (41) including an indicator for the selected power mode,
- in response to receiving a power mode change response (42) confirming that the mobile terminal (20, 29) may enter the previously selected power mode, switching to the selected power mode by the mobile terminal (20, 29).

15. The method of claim 14,
performed by the mobile terminal (20, 29) of any one of claims 1 to 12.

## Patentansprüche

1. Mobiles Endgerät (20, 29), aufweisend:
ein Modem (22;62) zur Kommunikation mit einem drahtlosen Netzwerk (10), und
eine Logikschaltung (23; 61), welche dazu ausgestaltet ist, um
- einen Powermodus aus einer Mehrzahl an Powermodi auszuwählen, wobei sich alle der Powermodi von dem Radio Ressource Control, RRC, Zustand unterscheiden und mit einer Parametereinstellung, welche einen Betrieb in dem entsprechenden Powermodus festlegt, verknüpft ist,
- falls der ausgewählte Powermodus von einem gegenwärtigen Powermodus des mobilen Endgeräts (20, 29) unterschiedlich ist, das Modem (22; 62) derart zu steuern, dass es eine Powermodus-Änderungsanfrage (41), welche einen Indikator für den ausgewählten Powermodus aufweist, zu dem drahtlosen Netzwerk (10) überträgt, und
- in Erwiderung auf ein Empfangen einer Powermodus-Änderungsbeantwortung (42), welche bestätigt, dass das mobile Endgerät (20, 29) in den zuvor ausgewählten Powermodus übertreten kann, Steuern des mobilen Endgeräts (20, 29), um zu dem ausgewählten Powermodus zu wechseln.

2. Mobiles Endgerät (20, 29) nach Anspruch 1,
wobei die Logikschaltung (23; 61) ausgestaltet ist, um den Powermodus in Abhängigkeit von den Anwendungen (63), welche von dem mobilen Endgerät (20, 29) ausgeführt werden, auszuwählen, um Datentransfers zu dem mobile Endgerät (20, 29) zu verringern, während die Anwendungen (63) durch das mobile Endgerät (20, 29) ausgeführt werden.

3. Mobiles Endgerät (20, 29) nach Anspruch 1 oder Anspruch 2,
wobei das mobile Endgerät (20, 29) ausgestaltet ist, um zwischen den Radio Ressource Control, RRC, Zuständen (50-54) zu wechseln, während es in dem ausgewählten Powermodus betrieben wird.

4. Mobiles Endgerät (20, 29) nach Anspruch 3,
wobei der ausgewählte Powermodus und zumindest ein weiterer Powermodus der Mehrzahl an Powermodi unterschiedliche Parametereinstellungen für eine Signalisierung einer physikalischen Schicht zwischen dem mobilen Endgerät (20, 29) und dem Kommunikationsnetzwerk (10) aufweisen.

5. Mobiles Endgerät (20, 29) nach Anspruch 3 oder Anspruch 4,
wobei der ausgewählte Powermodus und zumindest ein anderer Powermodus der Mehrzahl an Powermodi unterschiedliche Discontinuous Reception, DRX, Parametereinstellungen aufweist, wobei die unterschiedlichen DRX-Parametereinstellungen mindestens eines von:
- unteschiedliche DRX-Taktdauern,
- unterschiedliche Inaktivitäts-Timerwerte, und/oder
- unterschiedliche Pagingdauern
aufweist.

6. Mobiles Endgerät (20, 29) nach einem der Ansprüche 3 bis 5,
wobei das mobile Endgerät (20, 29) ausgestaltet ist, um zwischen einem Ruhezustand und einem RRC verbundenen Zustand zu wechseln, während es in dem ausgewählten Powermodus betrieben wird.

7. Mobiles Endgerät (20, 29) nach einem der Ansprüche 3 bis 6,
wobei das mobile Endgerät (20, 29) ausgestaltet ist, um die Powermodus-Änderungsanfrage (41) in einem RRC-Verbindungserstellungsverfahren oder in einem RRC-Verbindungsrekonfigurationsverfahren zu übertragen.

8. Mobiles Endgerät (20, 29) nach einem der vorhergehenden Ansprüche, ferner aufweisend:
eine Anzeige (25),
wobei die Logikschalung (23; 61) ausgestaltet ist, um den Powermodus in Abhängigkeit davon, ob die Anzeige (25) ausgeschaltet ist, auszuwählen.

9. Mobiles Endgerät (20, 29) nach Anspruch 8, ferner aufweisend:
mindestens einen Sensor (26),
wobei die Logikschaltung (23; 61) ausgestaltet ist, um den Powermodus in Abhängigkeit davon, ob die Anzeige (25) ausgeschaltet ist, und in Abhängigkeit von einem Ausgabesignal (66) des mindestens einen Sensor (26) auszuwählen.

10. Mobiles Endgerät (20, 29) nach Anspruch 8 oder Anspruch 9,
wobei die Logikschaltung (23; 61) ausgestaltet ist, um eine Anwendung (63) davon abzuhalten, eine Datenübertagung über das Modem (22; 62) herbeizuführen, wenn die Anzeige (25) ausgeschaltet ist.

11. Mobiles Endgerät (20, 29) nach einem der vorhergehenden Ansprüche, wobei die Powermodus-Änderungsanfrage (41) eine Mehrzahl an Indikatorbits aufweist, welche den Indikator für den ausgewählten Powermodus umfassen.

12. Mobiles Endgerät (20, 29) nach einem der vorhergehenden Ansprüche, wobei die Logikschaltung (23; 61) ausgestaltet ist, zum
- Erkennen eines weiteren Powermodus in Abhängigkeit eines weiteren Powermodus-Indikators, welcher in einer weiteren Leistungsmodus-Änderungsanfrage (46), die durch das mobile Endgerät (20, 29) empfangen wird, inkludiert ist,
- in Erwiderung auf das Empfangen der weiteren Powermodus-Änderungsanfrage (46), Steuern des Modems (22; 62), um eine weitere Powermodus-Änderungsbeantwortung (42) zu übertragen, und
- in Erwiderung auf das Empfangen der weiteren Powermodus-Änderungsanfrage (46), Steuern des mobilen Endgeräts (20, 29), um zu dem weiteren Powermodus zu wechseln.

13. Kommunikationssystem, aufweisend:
das mobile Endgerät (20, 29) gemäß einem der vorhergehenden Ansprüche; und
ein Radiozugriffsnetzwerk (10), welches ausgestaltet ist zum
- Empfangen der Powermodus-Änderungsanfrage (41) von dem mobilen Endgerät (20, 29),
- Erkennen des ausgewählten Powermodus basierend auf dem Indikator, welcher in der Powermodus-Änderungsanfrage (41) inkludiert ist,
- Übertragen der Powermodus-Änderungsbeantwortung (42) zu dem mobilen Endgerät (20, 29), und
- Steuern von Datenübertragungen zu dem mobilen Endgerät (20, 29) basierend auf dem ausgewählten Powermodus.

14. Verfahren zum Durchführen einer Umstellung zwischen Powermodi eines mobilen Endgeräts (20, 29), wobei das Verfahren aufweist:
- Auswählen, durch das mobile Endgerät (20, 29), eines Powermodus von einer Mehrzahl an Powermodi, wobei sich alle Powermodi von einem Radio Resource Control, RRC, Zustand unterscheiden und mit einer Parametereinstellung, welche den Betrieb in dem entsprechenden Powermodus festlegt, verknüpft ist,
- falls sich der ausgewählte Powermodus von einem gegenwärtigen Powermodus des mobilen Endgeräts (20, 29) unterscheidet, Übertagen einer Powermodus-Änderungsanfrage (41) durch das mobile Endgerät (20, 29) über eine drahtlose Schnittstelle (21) zu einem drahtlosen Netzwerk (10), wobei die Powermodus-Änderungsanfrage (41) einen Indikator für den ausgewählten Powermodus aufweist,
- in Erwiderung auf ein Empfangen einer Leistungsmodus-Änderungsbeantwortung (42), welche bestätigt, dass das mobile Endgerät (20, 29) in den zuvor ausgewählten Powermodus eintreten kann, Wechseln des ausgewählten Powermodus durch das mobile Endgerät (20, 29).

15. Verfahren nach Anspruch 14, welche mit dem mobilen Endgerät (20, 29) gemäß einem der Ansprüche 1 bis 12 durchgeführt wird.

## Revendications

1. Terminal mobile (20, 29) comprenant :
un modem (22 ; 62) pour assurer une communication avec un réseau sans fil (10), et
une logique (23 ; 61) configurée :
- pour sélectionner un mode de puissance à partir d'une pluralité de modes de puissance, les modes de puissance étant chacun différent d'un état de Commande de Ressources Radio, RRC, et étant associé à un réglage de paramètres définissant le fonctionnement dans le mode puissance respectif,
- pour commander, si le mode de puissance sélectionné est différent d'un mode de puissance actuel du terminal mobile (20, 29), le modem (22 ; 62) pour transmettre au réseau sans fil (10) une demande de changement de mode de puissance (41) qui comporte un indicateur pour le mode de puissance sélectionné, et
- pour commander, en réponse à la réception à partir du réseau sans fil (10) d'une réponse de changement de mode de puissance (42) confirmant que le terminal mobile (20, 29) peut entrer dans le mode de puissance précédemment sélectionné, le terminal mobile (20, 29) pour passer au mode de puissance sélectionné.

2. Terminal mobile (20, 29) de la revendication 1, dans lequel la logique (23 ; 61) est configurée pour sélectionner le mode de puissance en fonction des applications (63) exécutées par le terminal mobile (20, 29) pour réduire les transferts de données au terminal mobile (20, 29) pendant que les applications (63) sont exécutées par le mobile terminal (20, 29).

3. Terminal mobile (20, 29) de la revendication 1 ou 2, dans lequel le terminal mobile (20, 29) est configuré pour commuter entre des différents états (50-54) de Commande de Ressources Radio, RRC, lors du fonctionnement dans le mode de puissance sélectionné.

4. Terminal mobile (20, 29) de la revendication 3,
dans lequel le mode de puissance sélectionné et au moins un autre mode de puissance de la pluralité de modes de puissance ont des différents réglages de paramètres pour la signalisation de couche physique entre le terminal mobile (20, 29) et le réseau de communication (10).

5. Terminal mobile (20, 29) de la revendication 3 ou 4, dans lequel le mode de puissance sélectionné et au moins un autre mode de puissance de la pluralité de modes de puissance ont des différents réglages de paramètres de réception discontinue, DRX, où les différents réglages de paramètres DRX comprennent au moins l'un des éléments suivants :
- des différentes longueurs de cycles DRX,
- des différentes valeurs de temporisateur d'inactivité, et/ou
- des différents cycles de radiomessagerie.

6. Terminal mobile (20, 29) de l'une quelconque des revendications 3 à 5,
dans lequel le terminal mobile (20, 29) est configuré pour commuter entre un état inactif et un état RRC connecté lors du fonctionnement dans le mode de puissance sélectionné.

7. Terminal mobile (20, 29) de l'une quelconque des revendications 3 à 6,
dans lequel le terminal mobile (20, 29) est configuré pour transmettre la demande de changement de mode de puissance (41) dans une procédure d'Établissement de Connexion RRC ou dans une procédure de Reconfiguration de Connexion RRC.

8. Terminal mobile (20, 29) de l'une quelconque des revendications précédentes, comprenant en outre :
un dispositif d'affichage (25),
où la logique (23 ; 61) est configurée pour sélectionner le mode de puissance en fonction de si le dispositif d'affichage (25) est mis hors tension.

9. Terminal mobile (20, 29) de la revendication 8, comprenant en outre :
au moins un détecteur (26),
dans lequel la logique (23 ; 61) est configurée pour sélectionner le mode de puissance en fonction de si le dispositif d'affichage (25) est mis hors tension et en fonction d'un signal de sortie (66) de l'au moins un détecteur (26).

10. Terminal mobile (20, 29) de la revendication 8 ou 9, dans lequel la logique (23 ; 61) est configurée pour empêcher une application (63) de provoquer une transmission de données via le modem (22 ; 62) lorsque le dispositif d'affichage (25) est mis hors tension.

11. Terminal mobile (20, 29) de l'une quelconque des revendications précédentes,
dans lequel la demande de changement de mode de puissance (41) comprend une pluralité de bits d'indicateur qui comportent l'indicateur pour le mode de puissance sélectionné.

12. Terminal mobile (20, 29) de l'une quelconque des revendications précédentes,
dans lequel la logique (23 ; 61) est configurée :
- pour identifier un mode de puissance supplémentaire en fonction d'un identifiant d'un mode de puissance supplémentaire inclut dans une demande de changement de mode de puissance supplémentaire (46) reçue par le terminal mobile (20, 29),
- pour commander, en réponse à la réception de la demande de changement de mode de puissance supplémentaire (46), le modem (22 ; 62) pour transmettre une réponse de changement de mode de puissance supplémentaire (42), et
- pour commander, en réponse à la réception de la demande de changement de mode de puissance supplémentaire (46), le terminal mobile (20, 29) afin de passer au mode de puissance supplémentaire.

13. Système de communication, comprenant :
le terminal mobile (20, 29) de l'une quelconque des revendications précédentes ; et
un réseau d'accès radio (10) configuré :
- pour recevoir la demande de changement de mode de puissance (41) à partir du terminal mobile (20, 29),
- pour identifier le mode de puissance sélectionné sur la base de l'indicateur inclus dans la demande de changement de mode de puissance (41),
- pour transmettre la réponse de changement de mode de puissance (42) au terminal mobile (20, 29), et
- pour commander des transferts de données au terminal mobile (20, 29) sur la base du mode de puissance sélectionné.

14. Procédé permettant la réalisation d'une transition entre des modes de puissance d'un terminal mobile (20, 29), le procédé comprenant le fait :
- de sélectionner, par le terminal mobile (20, 29), un mode de puissance parmi une pluralité de modes de puissance, les modes de puissance étant chacun différent d'un état de Commande de Ressource Radio, RRC, et étant associé à un réglage de paramètres définissant un fonctionnement dans le mode de puissance respectif,
- de transmettre, si le mode de puissance sélectionné est différent d'un mode de puissance actuel du terminal mobile (20, 29), par le biais du terminal mobile (20, 29), une demande de changement de mode de puissance (41) sur une interface sans fil (21) à un réseau sans fil (10), la demande de changement de mode de puissance (41) comportant un indicateur pour le mode de puissance sélectionné,
- pour passer, en réponse à la réception d'une réponse de changement de mode de puissance (42) confirmant que le terminal mobile (20, 29) peut entrer dans le mode de puissance précédemment sélectionné, au mode de puissance sélectionné par le terminal mobile (20, 29).

15. Procédé de la revendication 14, mis en oeuvre par le terminal mobile (20, 29) de l'une quelconque des revendications 1 à 12.
